# EUROPEAN PATENT SPECIFICATION

(11) **EP 1 596 088 B1**
(45) Date of publication and mention of the grant of the patent: **09.08.2017**
(21) Application number: 03770144.8
(22) Date of filing: 04.11.2003
(51) Int. Cl.: F16D 65/12

(54) **BRAKE DISK FOR VEHICLE**
SCHEIBENBREMSE FÜR EIN KRAFTFAHRZEUG
DISQUE DE FREIN DE VEHICULE

(30) Priority: 06.11.2002 JP 2002321918
(43) Date of publication of application: 16.11.2005
(73) Proprietor: KAWASAKI JUKOGYO KABUSHIKI KAISHA, Kobe shi, Hyogo 650-8670 (JP)
(72) Inventor: OKABE, Yasuhisa, Akashi-shi, Hyogo 673-0011 (JP)
(74) Representative: Jenkins, Peter David
(86) International application number: PCT/JP2003/014083
(87) International publication number: WO 2004/042247

(56) References cited:
- WO-A1-02/46639
- ES-A1- 2 164 534
- JP-A- 2000 329 177
- JP-A- 2001 165 212
- JP-A- 2001 182 764
- US-A1- 2002 040 832
- US-B1- 6 386 340
- US-B1- 6 386 340

## Description

### BACKGROUND OF THE INVENTION

### (Field of the Invention)

The present invention relates to a brake disc in a disc brake used in a vehicle such as a motorcycle.

### (Description of the Related Art)

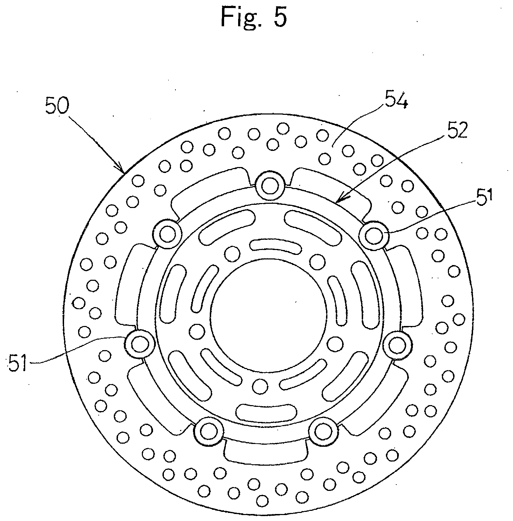

As the conventional brake disc used in motorcycles, a brake disc 50 shown in Fig. 5 has been well known (See the Japanese Design Registration No. 1151976.). The brake disc 50 has a circular outer periphery and also has an inner peripheral portion adapted to be coupled with an outer peripheral portion of a disc hub 52 by a plurality of rivet-like pins 51 arranged in a circumferential direction. When the disc hub 52 is bolted to a hub (not shown) of the wheel, the brake disc 50 is supported by the wheel through the disc hub 52. A braking force is applied to the wheel when opposite braking surfaces of the brake disc 50 are sandwiched by a pair of frictional pads in a caliper fitted to a vehicle frame structure.

In the meantime, the brake disk 50 is required to reduce its outer diameter and plate thickness in view of the demand for reduction in weight. However, if the outer diameter and the plate thickness are reduced, the heat capacity and the amount of heat dissipation decrease, so that during braking the temperature of the brake disc 50 may increase to result in thermal deformation of the brake disc 50. Also, since the radial width of the braking surfaces of the disc 50 is fixed in the circumferential direction, brake squeal or noises tend to occur during braking as a result of resonance taking place between the brake disc 50 and the frictional pads.

In view of the above, there is known a brake disc having an outer peripheral surface formed with a circumferentially extending groove in order to secure the amount of heat dissipation, but the effectiveness of the groove is still insufficient. According to a series of experiments conducted by the inventor of the present invention, it was found that the effectiveness of the groove was something within the range of a measurement error. Also, since the radial width of the braking surfaces of the brake disc is fixed in the circumferential direction, the brake noises cannot be prevented.

In addition, as a brake disc for use in automotive vehicles that is designed to reduce the weight and increase the amount of heat dissipation, the brake disc disclosed in United States Patent No. 6,386,340 is known in which the outer peripheral face and the inner peripheral face are formed in a sinusoidal waveform. However, the radial width of the braking surfaces of the brake disc remains fixed in the circumferential direction and, accordingly, the brake noises cannot be avoided.

US 20020040832A1 describes brake discs including apertures of varying dimensions and a brake disc in which the outer peripheral face and the inner peripheral face are formed in a wareform.

### SUMMARY OF THE INVENTION

The present invention has been devised in view of the foregoing situations and is intended to provide a brake disc in a disc brake for a vehicle, which can be manufactured lightweight, suppress the thermal deformation and is effective to prevent brake noises.

In order to accomplish the foregoing object, a brake disc for a vehicle according to the present invention is a brake disc that is supported by a wheel at an inner peripheral portion thereof through a plurality of support members and is operable to exert a braking force when sandwiched by frictional pads and which includes a plurality of outer recesses defined in an outer peripheral face so as to deploy in a circumferential direction, and braking surfaces engageable with the frictional pads and having a radial width that varies in a direction circumferentially thereof, wherein each of the outer recesses has a bottom having an arcuate shape occupying a portion of a circle concentric with an axis of rotation of the brake disc.

With the brake disc of the structure described above, not only can the weight be reduced in a quantity corresponding to the outer recesses, but also an outer peripheral portion of the brake disc, which has a greater thermal deformation than the inner peripheral portion because of the diameter greater than that of the inner peripheral portion, can expand along the outer recesses in the circumferential direction and, therefore, the thermal expansion of the outer peripheral portion can be sufficiently allowed not only in the circumferential direction, but also in the radial direction. In other words, the thermal deformation of the outer peripheral portion can easily be accommodated and an undesirable deformation of the brake disc in a direction across the thickness thereof (i.e., the axial direction) can be suppressed. Also, since the radial width of the braking surfaces changes in the circumferential direction of the brake disc, the surface area of each of the braking surfaces in contact with the frictional pads varies as the brake disc rotates and, therefore, resonance which would occur between the brake disc and the frictional pads can advantageously be prevented to thereby minimize the phenomenon of brake noises resulting from the resonance during braking.

The number of the outer recesses is preferably equal to or greater than that of the support members. According to this structural feature, because the number of the outer recesses in a number equal to or greater than that of locations at which the brake disc are fastened by the support members, the thermal deformation of the outer peripheral portion can easily be accommodated in the outer recesses.

Since the bottom of each of the outer recesses forms a convex surface or a surface smoothly curved to bulge in a direction radially outwardly, dirt and grits would hardly be accumulated in the outer recesses.

Preferably, each of the outer recesses has a depth that is set to a value within the range of 0.15 to 0.25 times a maximum width of the braking surface delimited between outermost and innermost peripheral edges of the braking surface. If the depth of each outer recess is smaller than the value 0.15 times the maximum width of the braking surface, the degree of change of the radial width of the braking surface in the circumferential direction becomes too small and, therefore, respective effects of the present invention to reduce the weight, suppress the thermal deformation and prevent the brake noises would be minimal. On the other hand, if the depth of each outer recess is more than the value 0.25 times the maximum width of the braking surface, the radial width of the braking surface becomes too small at an area where the outer recesses exist and, therefore, the braking force will decrease.

The brake disc may have an inner peripheral face formed with a plurality of inner recesses. According to this structural feature, additional formation of the inner recesses makes it possible to further reduce the weight of the brake disc and also to further facilitate change of the radial width of the braking surface, preventing the phenomenon of the brake noises which would occur during braking.

Each of the inner recesses may be formed in the inner peripheral face of the braking surface at a location between the neighboring support members.

Also, the inner recesses may be formed at respective locations of the inner peripheral face that confront with some of the plural outer recesses in a direction radially inwardly thereof. According to this feature, change of the radial width of the braking surface can be increased at such locations of the brake disc where the inner recesses exist.

Each of the inner recesses has a bottom which may be of, for example, an arcuate shape.

Preferably, each of the inner recesses has a depth that is set to a value within the range of 0.15 to 0.25 times a maximum width of the braking surface delimited between outermost and innermost peripheral edges of the braking surface.

### BRIEF DESCRIPTION OF THE DRAWINGS

Fig. 1 is a side view showing a motorcycle front wheel provided with a brake disc for an automotive disc brake assembly according to a first preferred embodiment of the present invention;
Fig. 2 is a transverse sectional view of the brake disc showing the manner in which the brake disc is fitted to the motorcycle front wheel;
Fig. 3A is a side view of the brake disc shown as coupled with a disc hub;
Fig. 3B is a fragmentary side view, on enlarged scale, showing the brake disc shown in Fig. 3B;
Fig. 4A is a side view of an alternative brake disc including features that may be present in some embodiments of the present invention shown as coupled with a disc hub;
Fig. 4B is a fragmentary side view, on enlarged scale, showing the brake disc shown in Fig. 4A; and
Fig. 5 is a side view of the conventional brake disc.

### DETAILED DESCRIPTION OF THE EMBODIMENTS

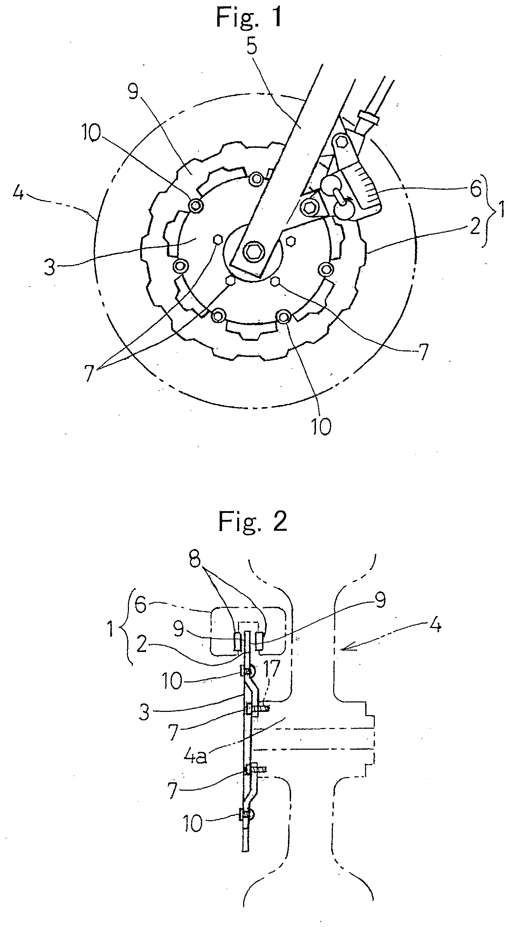

Hereinafter, preferred embodiments of the present invention will be described with reference to the accompanying drawings. Referring first to Fig. 1 illustrating, in a side view, a motorcycle front wheel provided with a brake disc for a vehicle according to a first preferred embodiment of the present invention, the brake disc identified by 2 forms a part of and is operatively associated with a disc brake assembly 1 that is mounted on a motorcycle. This brake disc 2 is fixedly mounted on a wheel 4 for rotation together therewith and has braking surfaces 9 and 9 opposite to each other. The disc brake assembly 1 also includes a caliper 6 mounted on a motorcycle body structure, for example, a front fork 5. As shown in Fig. 2, the brake disc 2 is fixedly mounted on the wheel 4 through a disc hub 3 rigidly secured to a wheel hub 4a of the wheel 4 by a plurality of bolts 7. The caliper 6 includes left and right frictional pads 8 and 8 that can be driven through caliper pistons (not shown) by a hydraulic pressure, generated in a master cylinder (not shown), so as to move close towards and away from each other. As will be described later, the caliper 6 includes two pairs of frictional pads 8 and 8. The left and right frictional pads 8 and 8 sandwich the braking surfaces 9 and 9 of the brake disc 2 to apply a braking force to the wheel 4.

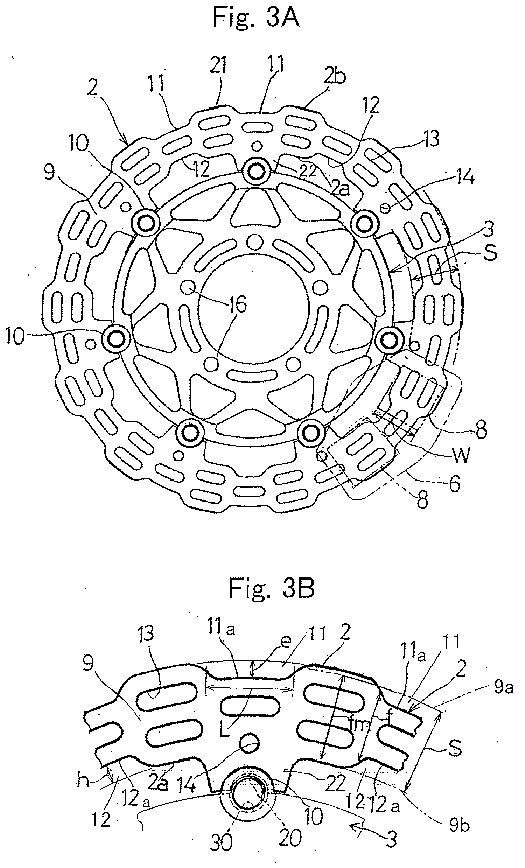

Fig. 3A illustrates a side view of the brake disc 2 coupled with the disc hub 3. The brake disc 2 has inner and outer peripheral faces 2a and 2b opposite to each other and also has a plurality of, for example, seven, support limbs 22 protruding radially inwardly from the inner peripheral face 2a and spaced an equal distance from each other in a circumferential direction. This brake disc 2 is connected with the disc hub 3 in coaxial relation through the support limbs 22 by the use of a corresponding number of support members 10 that are positioned spaced an equal distance from each other in the circumferential direction of the disc hub 3. The disc hub 3 has an inner peripheral portion formed with a circular row of bolt insertion holes 16 spaced equally in the circumferential direction and is mounted on the wheel 4 by threading bolts 7, which have been inserted in the bolt insertion holes 16, into screw holes 17 that are formed in the wheel hub 4a as shown in Fig. 2. The support members 10 shown in Fig. 3A may be a rivet-like pin and connection of the disc hub 3 with the brake disc 2 can be accomplished by upsetting those support members 10. Thus, it will readily be seen that the brake disc 2 is supported by the wheel 4 (Fig. 2) through the disc hub 3 by way of the support members 10.

More specifically, as shown in Fig. 3B, each of the support members 10 is loosely accommodated within semi-circular mounting grooves 20 and 30 defined respectively in the brake disc 2 and the disc hub 3, with a slight gap formed between the support member 10 and the corresponding mounting grooves 20, 30, so that vibrations of the brake disc 2 during braking can be prevented from being directly transmitted to the wheel 4 (Fig. 2). It is to be noted that each support member 10 may be a bolt.

Referring again to Fig. 3A, the outer peripheral face 2b of the brake disc 2 is formed with a plurality of circumferentially equidistantly spaced outer recesses 11, leaving protrusions 21 between the neighboring outer recesses 11. Thus, the outer peripheral face 2b of the brake disc 2 has the outer recesses 11 and the protrusions 21 that alternate with each other in a direction circumferentially thereof. The fourteen outer recesses 11 are employed herein. On the other hand, the inner peripheral face 2a of the brake disc 2 is formed with a plurality of circumferentially equidistantly spaced inner recesses 12 defined therein so as to extend radially inwardly of the brake disc 2 and positioned generally in alignment with the outer recesses 11. In the illustrated embodiment, each support limb 22 or each support member 10 is employed and arranged every other outer recess 11 in the outer periphery of the brake disc 2 while each inner recess 12 in the inner periphery of the brake disc 2 is employed and arranged every other outer recess 11 and generally in alignment with one of the outer recesses 11 which is out of alignment with the corresponding support limb 22 or the corresponding support member 10, i.e., between the neighboring support limbs 22 or the support members 10. Accordingly, it will readily be seen that the opposite braking surfaces 9 and 9 engageable with the frictional pads 8 and 8 has a width as measured in a direction radially thereof, which varies discretely in a direction circumferentially of the brake disc 2. It is also to be noted that although the two pairs of circumferentially spaced frictional pads 8 and 8 have been described as employed in the illustrated embodiment, only one pair of the frictional pads 8 and 8 may be employed.

To reduce the weight of the brake disc 2 to a value as small as possible, the brake disc 2 has a multiplicity of perforations 13 and 14 defined therein so as to extend completely across the thickness of the brake disc 2. As shown by the double-dotted phantom line in Fig. 3A, the frictional pads 8 and 8 have a width as measured in a direction radially with respect to the brake disc 2 and are engageable with the corresponding braking surface 9 of the brake disc 2 over the entire width thereof. Accordingly, as shown in Fig. 3B, each of the braking surfaces 9 of the brake disc 2 is represented by a surface region bound within an annular area S of a radial width W delimited between an innermost peripheral edge 9b and an outermost peripheral edges 9a of the respective braking surface 9 shown by the double-dotted lines extending in areas where no outer recesses 11 is formed.

Also, each outer recess 11 has a depth e defined between the bottom 11 a thereof and the imaginary line extending in touch with respective radially outermost edges of the neighboring radially outward protrusions 21 as shown in Fig. 3B, which depth e is preferably chosen to be within the range of 0.15 to 0.25 times and, more preferably, within the range of 0.17 to 0.23 times the maximum radial width f of each braking surface 9, that is, the radial distance fm between the outermost peripheral edge 9a and the innermost peripheral edge 9b. It is to be noted that in the illustrated embodiment the radial distance fin referred to above is shown to be equal to the maximum radial width W and, in such case, the depth e of each outer recess 11 is chosen to be 0.20 times the radial distance fm.

Each outer recess 11 also has an effective circumferential length L as measured between the neighboring radially outward protrusions 21 on respective sides of such outer recess 11 and along the imaginary circle depicted so as to pass through points each intermediate between the hill, represented by the radially outermost edge of the respective radially outward protrusion 21, and the dale represented by the bottom 11a of the respective outer recess 11. This effective circumferential length L of each of the outer recesses 11 is of a value preferably within the range of 0.30 to 1.40 times and, more preferably, within the range of 0.60 to 1.30 times the maximum radial width fin between the outermost peripheral edge 9a and the innermost peripheral edge 9b. In the illustrated embodiment, however, the effective circumferential length L is chosen to be 1.0 times the maximum radial width fm, i.e., of a value equal to the maximum radial width fin. Thus, the bottom 11 a of each outer recess 11 is of an arcuate shape occupying a portion of the circle concentric with the axis of rotation of the brake disc 2 and is positioned radially inwardly from the outermost peripheral edge 9a.

Similarly, each inner recess 12 has a depth h defined between the bottom 12a thereof and the innermost peripheral edge 9b, which depth h is chosen to be preferably within the range of 0.15 to 0.25 times and, more preferably, within the range of 0.17 to 0.23 times the maximum radial width fin of each braking surface 9 as is the case with the depth e of each outer recesses 11. In the illustrated embodiment, however, the depth h of each of the inner recesses 12 is chosen to be 0.20 times the maximum radial width fm. It is accordingly clear that the bottom 12a of each of the inner recesses 12 is positioned radially outwardly from the innermost peripheral edge 9b.

In the brake disc 2 so constructed as hereinabove described, since the outer peripheral face 2b of the brake disc 2 of Fig. 3A is formed with the plural outer recesses 11 deployed in a direction circumferentially thereof, the weight of the brake disc 2 can advantageously be reduced. Also, the formation of the plural outer recesses 11 in the brake disc 2 permits the outer peripheral portion, which has a greater thermal deformation than the inner peripheral portion because of the diameter greater than that of the inner peripheral portion, to expand along the outer recesses 11 in the circumferential direction and, therefore, thermal expansion of the outer peripheral portion can be sufficiently allowed not only in the circumferential direction, but also in the radial direction. In other words, thermal deformation of the outer peripheral portion can easily be accommodated. As a result thereof, an undesirable deformation of the brake disc 2 in a direction across the thickness thereof can advantageously be suppressed. Also, since the presence of the outer recesses 11 allows the radial width f of the braking surfaces 9, with which the frictional pads 8 are engageable, to vary in the circumferential direction of the brake disc 2, the surface area of each of the braking surfaces 9, with which the frictional pads 8 are engageable, varies as the brake disc 2 rotates and, therefore, resonance which would occur between the brake disc 2 and the frictional pads 8 if such surface area does not vary can advantageously be prevented to thereby minimize the phenomenon of brake noises resulting from the resonance during braking.

In addition, since respective portions of the inner peripheral face 2a of the brake disc 2 which confront the outer recesses 11 in the radial direction thereof are formed with the inner recesses 12, the weight of the brake disc 2 can advantageously be further reduced. Also, the formation of the plural inner recesses 12 in the brake disc 2 permits the radial width f of the braking surfaces 9, with which the frictional pads 8 are engageable respectively, to vary considerably in the circumferential direction of the brake disc 2, resulting in increase of the effect of preventing the resonance between the brake disc 2 and the frictional pads 8 during braking and, therefore, the phenomenon of brake noises resulting from the resonance during braking can advantageously be minimized.

Considering that the number of the outer recesses 11 is chosen to be equal to or greater than that of the support members 10 (although in the illustrated embodiment the outer recesses 11 are employed in a number twice that of the support member 10), the number of the outer recesses 11 which serve to accommodate thermal deformation comes to be equal to or greater than that of the support limbs 22 that are fastened by the respective support members 10 and, therefore, the thermal deformation can easily be accommodated.

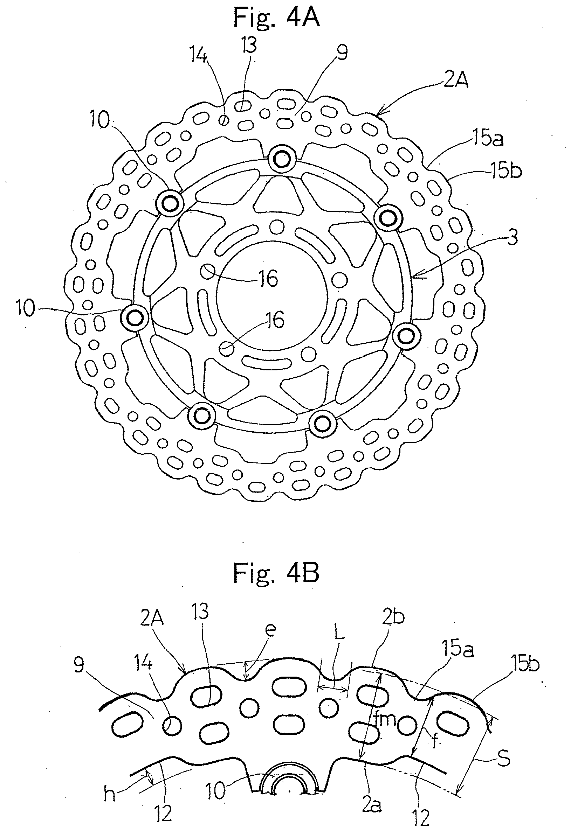

Fig. 4A illustrates a side view of an alternative brake disc including features that may be present in some embodiments of the present invention, which disc is shown as coupled with the disc hub. The brake disc now identified by 2A is similar to the brake disc 2 shown in and described with particular reference to Figs. 3A and 3B, except that the outer peripheral face 2b (Fig. 4B) of the brake disc 2A is so corrugated as to leave circumferentially alternating recesses and protrusions 15a and 15b that are arranged spaced an equidistant from each other in the circumferential direction thereof. On the other hand, the inner peripheral face 2a of the brake disc 2A is formed with the inner recesses 12 each positioned between the neighboring support members 10 and 10 in a manner similar to those described in connection with the previously described embodiment and, thus, it is clear that the radial width f of the braking surfaces 9, with which the frictional pads 8 are engageable, varies discretely in the circumferential direction of the brake disc 2A.

Even in the brake disc now under discussion, as shown in Fig. 4B showing a portion of the brake disc 2A on an enlarged scale, each of the outer recesses 15a has the depth e which is chosen to be of a value preferably within the range of 0.15 to 0.25 times the maximum radial width fin of the braking surfaces 9, although in the illustrated brake disc the depth e is chosen to be of a value 0.20 times the maximum radial width fin. Similarly, each of the outer recesses 15a has the effective circumferential length L that is chosen to be of a value 0.33 times the maximum radial width fin of the braking surface 9. Unlike the outer recesses 11 of which bottoms 11 a represent the arcuate shape occupying a portion of the circle concentric with the axis of rotation of the brake disc 2 in the previously described embodiment, the outer recesses 15a shown in Figs. 4A and 4B have their bottoms representing not the arcuate shape, but a generally sinusoidal waveform. Also, in the brake disc of Figs. 4A and 4B, the inner recesses 12 has the depth h which is chosen to be of a value preferably within the range of 0.15 to 0.25 times the maximum radial width fm of the braking surfaces 9, although so far shown therein the depth h is chosen to be 0.20 times the maximum radial width fm.

As described above, in the brake disc 2A so constructed, since the outer peripheral face 2b of the brake disc 2 is formed with the circumferentially alternating outer recesses and protrusions 15a and 15b deployed in a direction circumferentially thereof, the weight of the brake disc 2A can advantageously be reduced. Also, the formation of the circumferentially alternating outer recesses and protrusions 15a and 15b in the brake disc 2 permits the outer peripheral portion, which has a greater thermal deformation than the inner peripheral portion because of the diameter greater than that of the inner peripheral portion, to expand along the outer recesses in the circumferential direction and, therefore, thermal expansion of the outer peripheral portion can be sufficiently tolerated not only in the circumferential direction, but also in the radial direction. As a result thereof, an undesirable deformation of the brake disc 2A in a direction across the thickness thereof (i.e., the axial direction) can advantageously be suppressed. Also, since the presence of the outer recesses and protrusions 15a and 15b allows the radial width f of the braking surfaces 9, with which the frictional pads 8 are engageable, to vary in the circumferential direction of the brake disc 2A, the surface area of each of the braking surfaces 9, with which the frictional pads 8 are engageable, varies as the brake disc 2A rotates and, therefore, resonance which would occur between the brake disc 2A and the frictional pads 8 can advantageously be prevented to thereby minimize the phenomenon of brake noises resulting from the resonance during braking. It is to be noted that in the brake disc shown in and described with reference to Figs. 4A and 4B, the width of each of the protrusions 15b as measured in a direction circumferentially of the brake disc 2A is smaller than that of each protrusion 21 shown in Figs. 3A and 3B and, therefore, the amount of thermal deformation of each protrusion 15b is correspondingly smaller than that occurring in the protrusion 21. Accordingly, even though the circumferential width of each of the recesses 15a is small, thermal deformation of the protrusions 15b both in the radial direction and in the circumferential direction can be tolerated.

In addition, since respective portions of the inner peripheral face 2a of the brake disc 2A which are each encompassed between the neighboring support members 10 and 10 are formed with the inner recesses 12, not only can the weight of the brake disc 2A be further reduced advantageously, but also the phenomenon of brake noises resulting from the resonance between the brake disc 2A and the frictional pads 8 during braking can also be further minimized

Yet, since the number of the outer recesses 15a is chosen to be equal to or greater than that of the support members 10, it is effective to facilitate accommodation of the thermal deformation of the outer recesses 15a in a manner similar to that described in connection with the previously described embodiment.

A series of experiments were conducted to determine the amount of thermal deformation occurring in the brake disc 2 and 2A and the conventional brake disc 50 shown in Fig. 5. Results of those experiments are shown in Table 1 below. The amount of thermal deformation of the brake discs 2, 2A and 50 in thickness (i.e., the axial thickness) was determined in terms of millimeter by heating to 500 DEG C one of the opposite braking surfaces of each of the brake fastened by the respective support members 10 and, therefore, the thermal deformation can easily be accommodated.

Fig. 4A illustrates a side view of the brake disc according to a second preferred embodiment of the present invention, which disc is shown as coupled with the disc hub. The brake disc now identified by 2A is similar to the brake disc 2 shown in and described with particular reference to Figs. 3A and 3B, except that the outer peripheral face 2b (Fig. 4B) of the brake disc 2A is so corrugated as to leave circumferentially alternating recesses and protrusions 15a and 15b that are arranged spaced an equidistant from each other in the circumferential direction thereof. On the other hand, the inner peripheral face 2a of the brake disc 2A is formed with the inner recesses 12 each positioned between the neighboring support members 10 and 10 in a manner similar to those described in connection with the previously described embodiment and, thus, it is clear that the radial width f of the braking surfaces 9, with which the frictional pads 8 are engageable, varies discretely in the circumferential direction of the brake disc 2A.

Even in the embodiment now under discussion, as shown in Fig. 4B showing a portion of the brake disc 2A on an enlarged scale, each of the outer recesses 15a has the depth e which is chosen to be of a value preferably within the range of 0.15 to 0.25 times the maximum radial width fm of the braking surfaces 9, although in the illustrated embodiment the depth e is chosen to be of a value 0.20 times the maximum radial width fm. Similarly, each of the outer recesses 15a has the effective circumferential length L that is chosen to be of a value 0.33 times the maximum radial width fm of the braking surface 9. Unlike the outer recesses 11 of which bottoms 11 a represent the arcuate shape occupying a portion of the circle concentric with the axis of rotation of the brake disc 2 in the previously described embodiment, the outer recesses 15a shown in Figs. 4A and 4B have their bottoms representing not the arcuate shape, but a generally sinusoidal waveform. Also, in the embodiment of Figs. 4A and 4B, the inner recesses 12 has the depth h which is chosen to be of a value preferably within the range of 0.15 to 0.25 times the maximum radial width fm of the braking surfaces 9, discs 2, 2A and 50 while the other of the opposite braking surfaces was left at room temperature.

**Table 1**

| Type of Disc | First Embodiment | Brake Disc of Fig. 4A | Conventional |
|---|---|---|---|
| Amt. of Thermal Deformation (mm) | 1.06 | 1.18 | 1.21 |

From the results of measurement shown in Table 1, it is clear that the amount of thermal deformation (1.18 mm) in the brake disc 2A according to the brake disc shown in and described with reference to Figs. 4A and 4B is smaller than the amount of thermal deformation (1.21mm) in the conventional brake disc 50 shown in Fig. 5 and that the amount of thermal deformation (1.06mm) in the brake disc 2 according to the first embodiment of the present invention shown in and described with reference to Figs. 3A and 3B is much smaller than that in the conventional brake disc 50 shown in Fig. 5.

## Claims

1. A brake disc (2) for a vehicle, which disc (2) is supported by a wheel (4) at an inner peripheral portion thereof through a plurality of support members (10) and is operable to exert a braking force when sandwiched by frictional pads (8), said brake disc (2) comprising:
a plurality of outer recesses (11) defined in an outer peripheral face (2b) so as to deploy in a circumferential direction; and
a braking surface (9) engageable with the frictional pad (8) and having a radial width that varies in a direction circumferentially thereof, **characterised in that** each of the outer recesses (11) has a bottom (11a) having an arcuate shape occupying a portion of a circle concentric with an axis of rotation of the brake disc (2).

2. The brake disc (2) for a vehicle as claimed in Claim 1, wherein the number of the outer recesses (11) is equal to or greater than that of the support members (10).

3. The brake disc (2) for a vehicle as claimed in Claim 1, wherein each of the outer recesses (11) has a depth that is set to a value within the range of 0.15 to 0.25 times a maximum width of the braking surface (9) delimited between outermost and innermost peripheral edges (9a, 9b) of the braking surface (9).

4. The brake disc (2) for a vehicle as claimed in Claim 1, further comprising a plurality of inner recesses (12) defined in an inner peripheral face (2a) so as to deploy in a circumferential direction.

5. The brake disc (2) for a vehicle as claimed in Claim 4, wherein each of the inner recesses (12) is formed in the braking surface (9) at a location between the neighboring support members (10).

6. The brake disc (2) for a vehicle as claimed in Claim 4, wherein the inner recesses (12) are formed at respective locations of the inner peripheral face (2a) that confront with some of the outer recesses (11) in a direction radially inwardly thereof.

7. The brake disc (2) for a vehicle as claimed in Claim 4, wherein each of the inner recesses (12) has a bottom (12a) having an arcuate shape.

8. The brake disc (2) for a vehicle as claimed in Claim 4, wherein each of the inner recesses (12) has a depth that is set to a value within the range of 0.15 to 0.25 times a maximum width of the braking surface (9) delimited between outermost and innermost peripheral edges (9a, 9b) of the braking surface (9).

9. The brake disc (2) for a vehicle as claimed in claim 1, wherein a protrusion (21) is defined between the neighbouring outer recesses (11), and the outer peripheral face (2b) of the brake disc (2) has the outer recesses (11) and the protrusions (21) that alternate with each other in a direction circumferentially thereof;
wherein the bottom (11a) of each outer recess (11) is positioned radially inwardly from the outermost peripheral edge (9a) of the braking surface (9).

10. The brake disc (2) for a vehicle as claimed in claim 2, further comprising a plurality of support limbs (22) defined at an inner peripheral face (2a) of the brake disc (2), the support limb (22) protruding radially inwardly from the inner peripheral face (2a) and being supported on the wheel (4) by the use of the support members (10).

11. The brake disc (2) for a vehicle as claimed in claim 1, wherein a circumferential length of each of the outer recesses (11) is of a value within the range of 0.30 to 1.40 times a maximum radial width of the braking surface (9).

12. The brake disc (2) for a vehicle as claimed in claim 9, wherein the surface area of the braking surface (9) to be engaged with the friction pad (8) varies as the brake disc (2) rotates.

## Patentansprüche

1. Bremsscheibe (2) für ein Fahrzeug, wobei die Scheibe (2) von einem Rad (4) an einem inneren Randabschnitt davon durch mehrere Trageelemente (10) getragen wird und dazu bedienbar ist, eine Bremskraft auszuüben, wenn sie zwischen Reibklötzen (8) eingeschoben ist, wobei die Bremsscheibe (2) Folgendes umfasst:
mehrere äußere Aussparungen (11), die in einer äußeren Randfläche (2b) definiert sind, um in einer Umfangsrichtung angewendet zu werden; und
eine Bremsoberfläche (9), die mit dem Reibklotz (8) in Eingriff gebracht werden kann und eine radiale Breite aufweist, die in einer Richtung umlaufend davon variiert,
**dadurch gekennzeichnet, dass** jede der äußeren Aussparungen (11) einen Boden (11a) aufweist, der eine gebogene Form aufweist, die einen Teil eines Kreises einnimmt, der mit einer Drehachse der Bremsscheibe (2) konzentrisch ist.

2. Bremsscheibe (2) für ein Fahrzeug nach Anspruch 1, wobei die Anzahl der äußeren Aussparungen (11) größer gleich der der Trageelemente (10) ist.

3. Bremsscheibe (2) für ein Fahrzeug nach Anspruch 1, wobei jede der äußeren Aussparungen (11) eine Tiefe aufweist, die auf einen Wert innerhalb eines Bereichs des 0,15- bis 0,25-fachen einer maximalen Breite der Bremsoberfläche (9) eingestellt ist, die zwischen der äußersten und der innersten Randkante (9a, 9b) der Bremsoberfläche (9) abgegrenzt ist.

4. Bremsscheibe (2) für ein Fahrzeug nach Anspruch 1, die weiterhin mehrere innere Aussparungen (12) umfasst, die in einer inneren Randfläche (2a) definiert sind, um in einer Umfangsrichtung angewendet zu werden.

5. Bremsscheibe (2) für ein Fahrzeug nach Anspruch 4, wobei jede der inneren Aussparungen (12) in der Bremsoberfläche (9) an einer Stelle zwischen den benachbarten Trageelementen (10) ausgebildet ist.

6. Bremsscheibe (2) für ein Fahrzeug nach Anspruch 4, wobei die inneren Aussparungen (12) an jeweiligen Stellen der inneren Randfläche (2a) ausgebildet sind, die einigen der äußeren Aussparungen (11) in einer Richtung radial nach innen davon gegenüberstehen.

7. Bremsscheibe (2) für ein Fahrzeug nach Anspruch 4, wobei jede der inneren Aussparungen (12) einen Boden (12a) aufweist, der eine gebogene Form aufweist.

8. Bremsscheibe (2) für ein Fahrzeug nach Anspruch 4, wobei jede der inneren Aussparungen (12) eine Tiefe aufweist, die auf einen Wert innerhalb eines Bereichs des 0,15- bis 0,25-fachen einer maximalen Breite der Bremsoberfläche (9) eingestellt ist, die zwischen der äußersten und der innersten Randkante (9a, 9b) der Bremsoberfläche (9) abgegrenzt ist.

9. Bremsscheibe (2) für ein Fahrzeug nach Anspruch 1, wobei ein Vorsprung (21) zwischen den benachbarten äußeren Aussparungen (11) definiert ist und die äußere Randfläche (2b) der Bremsscheibe (2) die äußeren Aussparungen (11) und die Vorsprünge (21) aufweist, die einander in einer Richtung umlaufend davon abwechseln;
wobei der Boden (11a) jeder äußeren Aussparung (11) radial nach innen von der äußersten Randkante (9a) der Bremsoberfläche (9) positioniert ist.

10. Bremsscheibe (2) für ein Fahrzeug nach Anspruch 2, die weiterhin mehrere Trageschenkel (22) umfasst, die an einer inneren Randfläche (2a) der Bremsscheibe (2) definiert sind, wobei der Trageschenkel (22) radial nach innen von der inneren Randfläche (2a) vorspringt und auf dem Rad (4) durch die Verwendung der Trageelemente (10) getragen wird.

11. Bremsscheibe (2) für ein Fahrzeug nach Anspruch 1, wobei eine Umfangslänge jede der äußeren Aussparungen (11) einen Wert innerhalb des Bereichs des 0,30- bis 1,40-fachen einer maximalen radialen Breite der Bremsoberfläche (9) hat.

12. Bremsscheibe (2) für ein Fahrzeug nach Anspruch 9, wobei der Oberflächenbereich der Bremsoberfläche (9), die mit dem Reibklotz (8) in Eingriff gebracht werden soll, variiert, wenn die Bremsscheibe (2) sich dreht.

## Revendications

1. Disque de frein (2) pour un véhicule, ce disque (2) étant soutenu par une roue (4) au niveau d'une portion périphérique interne de celle-ci par l'intermédiaire d'une pluralité d'éléments de support (10) et étant apte à fonctionner de façon à exercer une force de freinage lorsqu'il est pris en sandwich par des patins frictionnels (8), ledit disque de frein (2) comprenant :
une pluralité d'évidements externes (11) définis dans une face périphérique externe (2b) de sorte à se déployer suivant un sens circonférentiel ; et
une surface de freinage (9) apte à se solidariser avec le patin frictionnel (8) et ayant une largeur radiale qui varie suivant un sens dans le plan circonférentiel de celui-ci,
**caractérisé en ce que** chacun des évidements externes (11) possède une partie inférieure (11a) avec une forme arquée laquelle occupe une portion d'un cercle concentrique avec un axe de rotation du disque de frein (2).

2. Disque de frein (2) pour un véhicule selon la revendication 1, le nombre d'évidements externes (11) étant égal ou supérieur à celui des éléments de support (10).

3. Disque de frein (2) pour un véhicule selon la revendication 1, chacun des évidements externes (11) ayant une profondeur qui est réglée sur une valeur se situant dans les limites de la gamme de 0,15 à 0,25 fois une largeur maximale de la surface de freinage (9) délimitée entre le bord périphérique situé le plus à l'extérieur et le bord périphérique situé le plus à l'intérieur (9a, 9b) de la surface de freinage (9).

4. Disque de frein (2) pour un véhicule selon la revendication 1, comprenant en outre une pluralité d'évidements internes (12) définis dans une face périphérique interne (2a) de sorte à se déployer suivant un sens circonférentiel.

5. Disque de frein (2) pour un véhicule selon la revendication 4, chacun des évidements internes (12) étant formé dans la surface de freinage (9) au niveau d'un emplacement entre les éléments de support avoisinants (10).

6. Disque de frein (2) pour un véhicule selon la revendication 4, les évidements internes (12) étant formés au niveau d'emplacements respectifs de la face périphérique interne (2a) qui sont opposés à certains des évidements externes (11) suivant un sens dans le plan radial vers l'intérieur de ceux-ci.

7. Disque de frein (2) pour un véhicule selon la revendication 4, chacun des évidements internes (12) possédant une partie inférieure (12a) avec une forme arquée.

8. Disque de frein (2) pour un véhicule selon la revendication 4, chacun des évidements internes (12) ayant une profondeur qui est réglée sur une valeur se situant dans les limites de la gamme de 0,15 à 0,25 fois une largeur maximale de la surface de freinage (9) délimitée entre le bord périphérique situé le plus à l'extérieur et le bord périphérique situé le plus à l'intérieur (9a, 9b) de la surface de freinage (9).

9. Disque de frein (2) pour un véhicule selon la revendication 1, une saillie (21) étant définie entre les évidements externes avoisinants (11), et la face périphérique externe (2b) du disque de frein (2) possédant les évidements externes (11) et les saillies (21) qui alternent l'une avec l'autre suivant un sens dans le plan circonférentiel de celle-ci ;
cas dans lequel la partie inférieure (11a) de chaque évidement externe (11) est positionnée dans le plan radial vers l'intérieur à partir du bord périphérique situé le plus à l'extérieur (9a) de la surface de freinage (9).

10. Disque de frein (2) pour un véhicule selon la revendication 2, comprenant en outre une pluralité de membres de support (22) définis au niveau d'une face périphérique interne (2a) du disque de frein (2), le membre de support (22) faisant saillie dans le plan radial vers l'intérieur à partir de la face périphérique interne (2a) et étant soutenu sur la roue (4) grâce à l'utilisation des éléments de support (10).

11. Disque de frein (2) pour un véhicule selon la revendication 1, une longueur circonférentielle de chacun des évidements externes (11) ayant une valeur se situant dans les limites de la gamme de 0,30 à 1,40 fois une largeur radiale maximale de la surface de freinage (9).

12. Disque de frein (2) pour un véhicule selon la revendication 9, la superficie de la surface de freinage (9) destinée à être solidarisée avec le patin de friction (8) variant au fur et à mesure que le disque de frein (2) tourne.
